# EUROPÄISCHE PATENTSCHRIFT

(11) **EP 1 255 964 B1**
(45) Veröffentlichungstag und Bekanntmachung des Hinweises auf die Patenterteilung: **12.03.2008**
(21) Anmeldenummer: 02711768.8
(22) Anmeldetag: 09.01.2002
(51) Int. Cl.: G01C 21/34

(54) **NAVIGATIONSVERFAHREN MIT DYNAMISCHER ZIELAUSWAHL UND NAVIGATIONSGERÄT**
NAVIGATION METHOD WITH DYNAMIC DESTINATION SELECTION AND NAVIGATION DEVICE
PROCEDE DE NAVIGATION A SELECTION DE DESTINATION DYNAMIQUE ET APPAREIL DE NAVIGATION

(30) Priorität: 11.01.2001 DE 10100956
(43) Veröffentlichungstag der Anmeldung: 13.11.2002
(73) Patentinhaber: Siemens VDO Automotive AG, 93056 Regensburg (DE)
(72) Erfinder: HOEVER, Georg, 81825 München (DE); MÄCKEL, Oliver, 81929 München (DE); ROTHFELDER, Martin, 80639 München (DE)
(86) Internationale Anmeldenummer: PCT/DE2002/000035
(87) Internationale Veröffentlichungsnummer: WO 2002/055963

(56) Entgegenhaltungen:
- US-A- 5 608 635
- US-A- 5 906 654

## Beschreibung

Die Erfindung betrifft ein Navigationsverfahren mit dynamischer Zielauswahl mit den Schritten:
- aus einer festgelegten Zielkategorie, die eine Mehrzahl von Zielen enthält, wird von einer Recheneinheit wenigstens ein Ziel ausgewählt,
- eine Route wird von einem Startpunkt zu dem von der Recheneinheit gewählten Ziel berechnet.
Weiterhin betrifft die Erfindung ein Navigationsgerät mit einer Recheneinheit und einem Speicher, in dem eine Vielzahl von vordefinierten Zielen gespeichert sind, die jeweils einer Zielkategorie zugerechnet sind, wobei in der Recheneinheit ein derartiges Navigationsverfahren durchgeführt wird.

Ein derartiges Navigationsverfahren und ein derartiges Navigationsgerät sind aus der US-A-5 906 654 bekannt.

Aus der im Vereinigte Motor-Verlage, Stuttgart, erscheinenden Zeitschrift auto connect 2/2000, Seiten 18 und 19, ist ein Navigationsgerät mit einer speziellen Zieleingabe für Sonderziele (Points Of Interest, POI) bekannt. Ein Sonderziel lässt sich einstellen, indem eine Stadt eingegeben wird und der Menüpunkt "Umgebungsziele" ausgewählt wird. In den Umgebungszielen sind Sonderziele aufgeführt, die der ausgewählten Stadt zugeordnet sind. Unter diesen Sonderzielen kann der Benutzer eines auswählen. Das Navigationsgerät bestimmt dann eine Route zu dem Sonderziel. Das Navigationsgerät weist ferner eine Funktion auf, mit der einzelne Ziele zu kompletten Routen zusammengefasst werden. Ändert der Benutzer des Navigationsgeräts, beispielsweise wegen eines Verkehrsstaus, seine Route, so hält das Navigationsgerät dennoch an der Führung zu dem bisherigen Sonderziel fest, obwohl aufgrund der Abweichung von der ursprünglich geplanten Route ein anderes Sonderziel derselben Kategorie vom neuen Standort aus besser zu erreichen wäre.

Ziel der Erfindung ist es, ein Navigationsverfahren und ein Navigationsgerät bereitzustellen, die eine dynamische Zielauswahl ermöglichen, bei der ein Ziel automatisch ausgewählt und an die Fahrsituation angepasst werden kann.

Dieses Ziel wird mit einem Navigationsverfahren und einem Navigationsgerät erreicht, wie sie in den unabhängigen Patentansprüchen definiert sind. Vorteilhafte Weiterbildungen der Erfindung sind in den abhängigen Ansprüchen angegeben.

Es ist ausreichend, wenn ein Benutzer eine Zielkategorie oder Zielgruppe festlegt. Das konkrete Ziel wird dann automatisch von der Recheneinheit und nicht vom Benutzer bestimmt. Bei der Routenplanung und bei der Zielführung wird also eine Mehrzahl von Zielen in Betracht gezogen und das geeignete Ziel automatisch ausgewählt. Die automatische Zielfestlegung ist besonders nützlich, wenn ein Ziel aus einer der Zielkategorien bzw. Zielgruppen Polizeiwachen, Krankenhäuser, Tankstellen, Parkhäuser, Bahnhöfe, Postämter oder dergleichen angesteuert werden soll. Der Benutzer wird selbst dann zu einem günstigen Ziel aus der gewählten Zielkategorie geführt, wenn er keine Stadt oder Gemeinde als Ziel eingegeben hat.

Weiterhin wird das Ziel in Abhängigkeit vom Verlauf einer Reise bei Bedarf automatisch geändert. Wenn der Benutzer der ursprünglich berechneten Route zu dem Ziel nicht folgen kann oder nicht folgen will, wird daher die Auswahl des Ziels aus der festgelegten Zielkategorie neu vorgenommen, wenn ein anderes Ziel derselben Zielkategorie für die neue Route günstiger gelegen ist.

In einer bevorzugten Ausführungsform wird eine Route berechnet, die über sämtliche Ziele einer festgelegten Zielkategorie in sinnvoller Weise verläuft. Es können daher beispielsweise Sehenswürdigkeiten entlang einer Reiseroute zu einem Ziel aufgesucht werden. Zusätzlich kann Information zu der jeweils angesteuerten Sehenswürdigkeit ausgegeben werden. Diese Sehenswürdigkeiten können Zwischenziele auf einer Route zu einem vom Benutzer oder von der Recheneinheit gewählten Endpunkt sein.

Weitere Vorteile, Merkmale und Anwendungsmöglichkeiten der Erfindung ergeben sich aus der nachfolgenden Beschreibung eines Ausführungsbeispiels in Verbindung mit den Zeichnungen.

Es zeigen:
- Figur 1: ein Navigationsgerät und
- Figur 2: eine Route zu Zielen, die vom Navigationsgerät bestimmt werden.

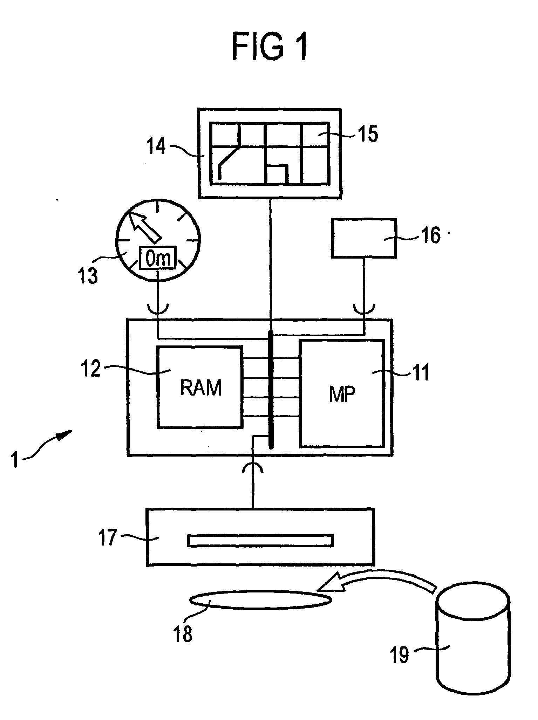

Figur 1 veranschaulicht ein in ein Automobil eingebautes Navigationsgerät 1, das eine Recheneinheit 11 (Mikroprozessor) und einen Speicher 12 aufweist. Dieser Speicher 12 ist ein nicht flüchtiger, überschreibbarer Arbeitsspeicher. Mit der Recheneinheit 11 sind über ein Bussystem weitere Komponenten verbunden. Darunter befinden sich Positionssensoren 13 mit einem Entfernungssensor, mit einem Richtungssensor und mit einem GPS-Satellitenempfänger, eine Anzeigeeinrichtung 14, auf der digitale Straßenkarten 15 und berechnete Routen darstellbar sind, eine Mobiltelefoneinheit 16, über die Verkehrsmeldungen empfangen und für die Routenberechnung eingesetzt werden können, und ein Laufwerk 17 für ein Speichermedium 18, nämlich eine DVD (Digital Versatile Disc).

Auf dem Speichermedium 18 ist wenigstens eine Datenbank 19 mit einem Netzwerk von Straßensegmenten der digitalen Straßenkarte 15 gespeichert. Ferner sind in der Datenbank 19 Zielkategorien gespeichert, in denen jeweils Sonderziele einer Gattung zu Zielgruppen zusammengefasst sind. Als Zielkategorien oder Zielgruppen sind Polizeiwachen, Krankenhäuser, Parkhäuser, Tankstellen, Postämter und Bahnhöfe aufgeführt. Zu den einzelnen Sonderzielen einer Zielkategorie sind ferner, falls vorhanden, Öffnungszeiten bei Tankstellen, Postämtern oder Parkhäusern, Fahrpläne bei Bahnhöfen oder Haltestellen sowie Tarife für die Benutzung von Parkhäuser, Parkplätze und Straßen angegeben. Diese Zusatzinformationen werden bei der Routenplanung eingesetzt, so dass die Recheneinheit 11 beispielsweise anstelle des zwar nächstliegenden, aber geschlossenen Sonderziels ein weiter entfernt liegendes, aber geöffnetes wählt. In ähnlicher Weise wird gegebenenfalls die Haltestelle eines Verkehrsmittels ausgewählt, dessen Abfahrtszeiten günstig für die voraussichtliche Ankunft des Benutzers liegen. Ferner kann aufgrund der vorhandenen Tarifinformation bezüglich Straßenmaut oder Parkgebühren von der Recheneinheit die kostengünstigste Route unter Einbeziehung von Fahrtzeit, Fahrtkosten und Nebenkosten berechnet werden.

Daneben kann der Benutzer im Arbeitsspeicher 12 selbst Zielkategorien anlegen und diesen Zielkategorien Ziele der Datenbank 19 zuordnen.

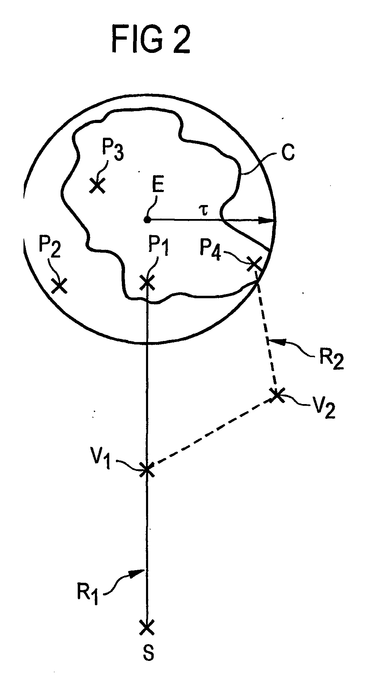

In Figur 2 ist ein Startpunkt S, von dem aus ein Benutzer aufbrechen möchte, und ein Endpunkt E dargestellt.

Der konkrete Endpunkt E der Reise kann entweder vom Benutzer oder vom Navigationsgerät bestimmt werden. In letzterem Falle gibt der Benutzer beispielsweise als Zielkategorie "Hotel" einer bestimmten Preis- oder Komfortklasse und einen Zielort ein. Daraufhin ermittelt die Recheneinheit des Navigationsgeräts aus den in ihrer Datenbank enthaltenen Angaben das kostengünstigste Ziel unter Berücksichtigung der Reisekosten und der in der Datenbank gespeicherten Preisinformation zu den Hotelzimmern das günstigste Hotel. Falls Informationen über die Belegung dieses ausgewählten Hotels auf der Homepage des Hotels im Internet abrufbar sind, greift das Telefonmodul hierauf zu. Falls das Hotel belegt ist, wird das nächstbeste Hotel als Endpunkt der Reise ermittelt.

Der Benutzer hat die Möglichkeit die Zielauswahl aus einer Zielkategorie auf diejenigen Ziele zu beschränken, die sich innerhalb eines vom Benutzer gewählten Gebiets befinden. Eine Auswahl des Gebiets kann durch das Legen einer Art von Lasso auf einer dargestellten Landkarte oder durch Festlegen eines Endpunkts E erfolgen. In letzterem Falle kann der Benutzer die Ziele entweder innerhalb der Gemeindegrenzen C des Endpunkts E oder innerhalb eines Umkreises oder Radius r vom Endpunkt E wählen. Im gezeigten Beispiel hat der Benutzer von der letztgenannten Möglichkeit Gebrauch gemacht.

Nachdem die Recheneinheit den Endpunkt E dem Benutzer angezeigt hatte, wählte der Benutzer zusätzlich die Zielkategorie "Sehenswürdigkeiten" als Zwischenziele aus. Diese enthält ausschließlich touristisch interessante Sonderziele und zugehörige Informationen. Dabei beschränkte er die Zielauswahl aus der Zielkategorie auf den Radius r um den Endpunkt E. Dort wurden von der Recheneinheit die Sehenswürdigkeiten oder Ziele P₁ - P₄ gefunden und in eine sinnvolle Reiseroute eingearbeitet. Ohne Beschränkung der Zielauswahl hätte die Recheneinheit sämtliche an der berechneten Route gelegenen Sehenswürdigkeiten bereitgestellt, die innerhalb einer vom Benutzer festlegbaren Entfernung von der idealen Reiseroute liegen.

Die Recheneinheit hat vom Startpunkt S bis zum Endpunkt E der Reise eine Route R₁ berechnet, die zunächst zu den touristisch interessanten Sonderziel P₁ dann zu P₂, dann zu P₃, dann zu P₄ und schließlich zum Endpunkt E führt.

Die Route wird aber von der Recheneinheit aufgrund einer empfangenen Verkehrsmeldung am Aufenthaltsort V₁ des Personenkraftwagens geändert. Auf der berechneten Umleitung muss das Fahrzeug den geänderten Aufenthaltsort V₂ erreichen. Eine Überprüfung der Recheneinheit ergibt, dass von dort aus das Sonderziel P₄ näher liegt als das ursprünglich gewählte Sonderziel P₁ derselben Zielkategorie. Die Recheneinheit ändert daher das Ziel und steuert das Ziel P₄ an. Ferner wird eine neue Route vom Ziel P₄ zum Endpunkt E der Reise berechnet, die über die Ziele oder Zwischenziele P₁, P₂ und P₃ führt.

Das Navigationsgerät hat also ohne Benutzereingriff ein Reiseziel geändert und selbsttätig eine neue touristische Route oder Reiseführung bzw. Stadtführung zusammengestellt.

Die Recheneinheit arbeitet in derselben Weise, wenn eine Routenänderung auf der Willkür des Benutzers beruht. Dabei wird stets ein neues Ziel ermittelt, wenn der Benutzer mehreren Leithinweisen zu einem von der Recheneinheit ausgewählten Ziel nicht gefolgt ist. Ein solches Verhalten wird als Hinweis darauf gewertet, dass der Benutzer das automatisch ausgewählte Ziel nicht ansteuern will.

## Patentansprüche

1. Navigationsverfahren mit dynamischer Zielauswahl mit den Schritten:
- aus einer festgelegten Zielkategorie, die eine Mehrzahl von Zielen (P₁; P₂; P₃; P₄) enthält, wird von einer Recheneinheit (11) wenigstens ein Ziel (P₁; P₂; P₃; P₄) ausgewählt,
- eine Route (R₁) wird von einem Startpunkt (S) zu dem wenigstens einen von der Recheneinheit gewählten Ziel (P₁; P₂; P₃; P₄) berechnet,
**dadurch gekennzeichnet, dass**
- die jeweiligen Aufenthaltsorte (V₁; V₂) eines Benutzers überwacht werden,
- bei einer Änderung des Aufenthaltsorts (V₁; V₂) von der Recheneinheit (11) geprüft wird, ob ein anderes Ziel (P₁; P₂; P₃; P₄) aus der festgelegten Zielkategorie näher am geänderten Aufenthaltsort (V₂) liegt,
- wenn das andere Ziel näher am geänderten Aufenthaltsort (V₂) liegt, eine neue Route (R₂) vom geänderten Aufenthaltsort (V₂) zu dem anderen Ziel berechnet und an einen Benutzer ausgegeben wird.

2. Navigationsverfahren nach dem vorhergehenden Anspruch, **dadurch gekennzeichnet, dass** die Prüfung, ob ein anderes Ziel (P₁; P₂; P₃; P₄) näher am geänderten Aufenthaltsort (V₂) ist, durchgeführt wird, wenn der geänderte Aufenthaltsort (V₂) nicht auf der berechneten Route (R₁) liegt.

3. Navigationsverfahren nach Anspruch 1 oder 2, **dadurch gekennzeichnet, dass** von der Recheneinheit (11) ein anderes Ziel (P₁; P₂; P₃; P₄) aus der festgelegten Zielkategorie ausgewählt wird, wenn der Benutzer mehreren aufeinander folgenden Leithinweisen zu einem ausgewählten Ziel (P₁; P₂; P₃; P₄) nicht gefolgt ist.

4. Navigationsverfahren nach einem der vorhergehenden Ansprüche, **dadurch gekennzeichnet, dass** eine Zielkategorie ausschließlich touristisch interessante Sonderziele enthält, und dass bei Wahl dieser Zielkategorie von der Recheneinheit eine Aufeinanderfolge der touristisch interessanten Sonderziele ausgewählt wird und eine Route (R₁; R₂) unter Berücksichtigung der ausgewählten Sonderziele berechnet wird.

5. Navigationsverfahren nach dem vorhergehenden Anspruch, **dadurch gekennzeichnet, dass** nur Sonderziele berücksichtigt werden, die sich innerhalb eines vom Benutzer gewählten Gebiets befinden.

6. Navigationsverfahren nach Anspruch 1, **dadurch gekennzeichnet, dass** wenigstens eine Zielkategorie eine Mehrzahl von Zielen (P₁; P₂; P₃; P₄) enthält, die vom Benutzer ausgewählt und gespeichert worden sind.

7. Navigationsverfahren nach einem der vorhergehenden Ansprüche, **dadurch gekennzeichnet, dass** für die Auswahl des Ziels (P₁; P₂; P₃; P₄) mindestens eines der folgenden Kriterien berücksichtigt wird:
- Öffnungszeiten des Ziels,
- Abfahrtszeiten eines öffentlichen Verkehrsmittels,
- die Höhe der zu entrichtenden Gebühren für das Ansteuern eines Ziels.

8. Navigationsverfahren nach einem der vorhergehenden Ansprüche, **dadurch gekennzeichnet, dass** das von der Recheneinheit (11) ausgewählte Ziel (P₁; P₂; P₃; P₄) an den Benutzer ausgegeben wird, und dass auf eine Benutzereingabe hin von der Recheinheit das ausgewählte Ziel (P₁; P₂; P₃; P₄) durch ein anderes Ziel (P₁; P₂; P₃; P₄) derselben Zielkategorie ersetzt wird.

9. Navigationsverfahren nach einem der vorhergehenden Ansprüche, **dadurch gekennzeichnet, dass** das von der Recheneinheit (11) ausgewählte Ziel (P₁; P₂; P₃; P₄) ein Zwischenziel auf einer Route zu einem Endpunkt (E) ist.

10. Navigationsgerät mit einer Recheneinheit, einer Benutzerschnittstelle, einem Speicher, in dem eine Vielzahl von vordefinierten Zielen gespeichert sind, die jeweils einer Zielkategorie zugeordnet sind, **dadurch gekennzeichnet, dass** die Recheneinheit (11) dazu ausgelegt ist, ein Navigationsverfahren nach einem der Ansprüche 1 bis 9 auszuführen.

## Claims

1. Navigation method with dynamic destination selection, having the following steps:
- a processor (11) selects at least one destination (P₁; P₂; P₃; P₄) from a stipulated destination category containing a plurality of destinations (P₁; P₂; P₃; P₄),
- a route (R₁) is calculated from a starting point (S) to the at least one destination (P₁; P₂; P₃; P₄) chosen by the processor, **characterized in that**
- a user's respective locations (V₁; V₂) are monitored,
- in the event of a change in the location (V₁; V₂), the processor (11) checks whether another destination (P₁; P₂; P₃; P₄) from the stipulated destination category is closer to the changed location (V₂),
- if the new destination is closer to the changed location (V₂), a new route (R₂) is calculated from the changed location (V₂) to the other destination and is output to a user.

2. Navigation method according to the preceding claim, **characterized in that** the check to determine whether another destination (P₁; P₂; P₃; P₄) is closer to the changed location (V₂) is carried out if the changed location (V₂) is not on the calculated route (R₁) .

3. Navigation method according to Claim 1 or 2, **characterized in that** the processor (11) selects another destination (P₁; P₂; P₃; P₄) from the stipulated destination category if the user has not followed a plurality of successive guidance instructions to a selected destination (P₁; P₂; P₃; P₄) .

4. Navigation method according to one of the preceding claims, **characterized in that** a destination category contains special destinations which are exclusively of tourist interest, and **in that**, when this destination category is chosen, the processor selects a succession of the special destinations which are of tourist interest and calculates a route (R₁; R₂) taking into account the selected special destinations.

5. Navigation method according to the preceding claim, **characterized in that** only special destinations situated within an area chosen by the user are taken into account.

6. Navigation method according to Claim 1, **characterized in that** at least one destination category contains a plurality of destinations (P₁; P₂; P₃; P₄) which have been selected and stored by the user.

7. Navigation method according to one of the preceding claims, **characterized in that** at least one of the following criteria is taken into account for selecting the destination (P₁; P₂; P₃; P₄):
- opening times of the destination,
- departure times of a public transport means,
- the level of the charges to be paid for heading for a destination.

8. Navigation method according to one of the preceding claims, **characterized in that** the destination (P₁; P₂; P₃; P₄) selected by the processor (11) is output to the user, and **in that** in response to a user input the processor replaces the selected destination (P₁; P₂; P₃; P₄) with another destination (P₁; P₂; P₃; P₄) from the same destination category.

9. Navigation method according to one of the preceding claims, **characterized in that** the destination (P₁; P₂; P₃; P₄) selected by the processor (11) is an intermediate destination on a route to a finishing point (E).

10. Navigation appliance having a processor, a user interface, a memory storing a multiplicity of predefined destinations associated with a respective destination category,
**characterized in that**
the processor (11) is designed to carry out a navigation method according to one of Claims 1 to 9.

## Revendications

1. Procédé de navigation à sélection dynamique de destinations comportant les phases suivantes:
- une unité de calcul (11) sélectionne parmi une catégorie définie de destinations, qui renferme une pluralité de destinations (P₁; P₂; P₃; P₄), au moins une destination (P₁; P₂; P₃; P₄),
- un itinéraire (R₁) est calculé à partir d'un point de départ (S) vers la au moins une destination (P₁; P₂; P₃; P₄) sélectionnée par l'unité de calcul,
**caractérisé par le fait que**
- les lieux de séjour respectifs (V₁; V₂) d'un utilisateur sont vérifiés,
- lors d'une modification du lieu de séjour (V₁; V₂), l'unité de calcul (11) contrôle si, dans la catégorie de destinations fixée, une autre destination (P₁; P₂; P₃; P₄) est plus proche du lieu de séjour modifié (V₂),
- lorsque l'autre destination est plus proche du lieu de séjour modifié (V₂), un nouvel itinéraire (R₂) est calculé entre le lieu de séjour modifié (V₂) et l'autre destination et indiqué à l'utilisateur.

2. Procédé de navigation selon la revendication précédente, **caractérisé par le fait que** la vérification destinée à contrôler si une autre destination (P₁; P₂; P₃; P₄) est plus proche du lieu de séjour modifié (V₂), est exécutée lorsque le lieu de séjour modifié (V₂) ne se trouve pas sur l'itinéraire calculé (R₁).

3. Procédé de navigation selon la revendication 1 ou 2, **caractérisé par le fait que** l'unité de calcul (11) sélectionne une autre destination (P₁; P₂; P₃; P₄) dans la catégorie de destinations fixée, lorsque l'utilisateur n'a pas suivi plusieurs indications de pilotage se succédant vers une destination sélectionnée (P₁; P₂; P₃; P₄) .

4. Procédé de navigation selon l'une des revendications précédentes, **caractérisé par le fait qu'**une catégorie de destinations ne renferme que des destinations particulières intéressantes au point de vue touristique et que, si cette catégorie de destinations est sélectionnée par l'unité de calcul, une succession de destinations particulières intéressantes au point de vue touristique est sélectionnée et un itinéraire (R₁; R₂) est calculé en tenant compte des destinations particulières sélectionnées.

5. Procédé de navigation selon la revendication précédente, **caractérisé par le fait que** seules des destinations particulières qui se trouvent à l'intérieur d'une région choisie par l'utilisateur, sont prises en considération.

6. Procédé de navigation selon la revendication 1, **caractérisé par le fait que** au moins une catégorie de destinations renferme une pluralité de destinations (P₁; P₂; P₃; P₄) qui ont été sélectionnées par l'utilisateur et mémorisées.

7. Procédé de navigation selon l'une des revendications précédentes, **caractérisé par le fait que**, pour la sélection de la destination (P₁; P₂; P₃; P₄) au moins l'un des critères suivants est pris en considération:
- Horaires d'ouverture de la destination,
- Heures de départ d'un moyen de transports publics,
- Importance des frais à supporter pour atteindre la destination.

8. Procédé de navigation selon l'une des revendications précédentes, **caractérisé par le fait que** la destination (P₁; P₂; P₃; P₄) sélectionnée par l'unité de calcul (11) est indiquée à l'utilisateur et que, à la suite d'une saisie effectuée par l'utilisateur, l'unité de calcul remplace la destination sélectionnée (P₁; P₂; P₃; P₄) par une autre destination (P₁; P₂; P₃; P₄) de la même catégorie de destinations.

9. Procédé de navigation selon l'une des revendications précédentes, **caractérisé par le fait que** la destination (P₁; P₂; P₃; P₄) sélectionnée par l'unité de calcul (11) est une destination intermédiaire sur un itinéraire vers un point terminal (E).

10. Appareil de navigation comportant une unité de calcul, une interface utilisateur et une mémoire, dans laquelle sont stockées une pluralité de destinations prédéfinies, lesquelles font chacune partie d'une catégorie de destinations, **caractérisé par le fait que** l'unité de calcul (11) est configurée pour exécuter un procédé de navigation selon l'une des revendications 1 à 9.
